# EUROPÄISCHE PATENTSCHRIFT

(11) **EP 4 157 649 B1**
(45) Veröffentlichungstag und Bekanntmachung des Hinweises auf die Patenterteilung: **19.02.2025**
(21) Anmeldenummer: 21728430.6
(22) Anmeldetag: 11.05.2021
(51) Int. Cl.: B60C 15/06, B60C 1/00

(54) **FAHRZEUGLUFTREIFEN IN RADIALER BAUART MIT EINEM FELGENGUMMI, VERWENDUNG EINES FELGENGUMMIS UND EIN FAHRZEUGRADSYSTEM UMFASSEND DEN FAHRZEUGLUFTREIFEN IN RADIALER BAUART**
RADIAL VEHICLE TYRE HAVING A RUBBER RIM STRIP, USE OF A RUBBER RIM STRIP, AND A VEHICLE WHEEL SYSTEM COMPRISING THE RADIAL VEHICLE TYRE
PNEUMATIQUE DE VÉHICULE À STRUCTURE RADIALE DOTÉ D'UN CAOUTCHOUC DE JANTE, UTILISATION D'UN CAOUTCHOUC DE JANTE ET SYSTÈME DE ROUE DE VÉHICULE COMPRENANT LE PNEUMATIQUE DE VÉHICULE À STRUCTURE RADIALE

(30) Priorität: 28.05.2020 DE 102020206734
(43) Veröffentlichungstag der Anmeldung: 05.04.2023
(73) Patentinhaber: Continental Reifen Deutschland GmbH, 30175 Hannover (DE)
(72) Erfinder: FUNK-FRIEDEK, Sascha, 30165 Hannover (DE); MONTALVO, Mario, 30165 Hannover (DE); RÖMER, Justus, 30165 Hannover (DE); PLÜCKERS, Matthias, 30165 Hannover (DE)
(74) Vertreter: Continental Corporation
(86) Internationale Anmeldenummer: PCT/DE2021/200065
(87) Internationale Veröffentlichungsnummer: WO 2021/239193

(56) Entgegenhaltungen:
- EP-A1- 2 738 022
- EP-A2- 1 992 506
- DE-A1- 102013 107 385
- JP-A- 2016 124 429

## Beschreibung

Die Erfindung betrifft einen Fahrzeugluftreifen in radialer Bauart mit einem Felgengummi, umfassend zwei Wulstbereiche mit Wulstkernen, eine um die Wulstkerne verlaufende Karkasseinlage mit sich in Richtung Seitenwände erstreckenden Karkasshochschlägen. Die Erfindung betrifft auch eine Verwendung eines Felgengummis und ein Fahrzeugradsystem umfassend den Fahrzeugluftreifen in radialer Bauart.

Ein derartiger Fahrzeugluftreifen ist aus der EP 2 500 188 A1 bekannt. Im Allgemeinen verläuft ein Felgengummi als im Querschnitt schmaler Streifen entlang des Karkasshochschlages bis in den Bereich radial unterhalb des Wulstkernes. Der Felgengummi kann dabei aus einem und optional weiteren Felgengummiteilen bestehen. In dem Fall, in dem der Felgengummi aus zwei Felgengummiteilen besteht, kann das erste Felgengummiteil beispielsweise wie in EP 2 500 188 A1 dargestellt außenseitig zumindest teilweise das zweite Felgengummiteil überdecken, wobei das erste Felgengummiteil in Richtung Laufstreifen von der Seitenwand überlappt wird.

Die EP 1992506A2 offenbart einen Schwerlastreifen mit einer Windwulststruktur, bei der ein umgeschlagener Abschnitt einer Karkasseinlage um einen Wulstkern gewickelt ist, wobei ein Wulstabschnitt mit einer Wulstverstärkungsschicht ausgestattet ist mit U-förmigem Querschnitt und einem Wulstscheitelgummi mit dreieckförmigem Querschnitt.

Ferner offenbart die JP 2016124429A einen Felgenpolstergummi, welcher an einem Punkt angeordnet ist, der die Felge eines Wulstteils berührt.

Die DE 102013107385A1 beschreibt einen Fahrzeugluftreifen in radialer Bauart mit zumindest einem Bauteil aus zumindest einer elektrisch nicht leitfähigen Gummimischung, mit Wulstbereichen mit Wulstkernen, einer um die Wulstkerne verlaufenden Karkasseinlage mit Hochschlägen, die sich Richtung Seitenwände erstrecken, mit einem Felgengummi, welcher die äußere Oberfläche des Wulstbereiches bildet, entlang des Karkasshochschlages verläuft und aus einem Felgengummiteil aus einer elektrisch nicht leitfähigen Gummimischung und einem Felgengummiteil aus einer elektrisch leitfähigen Gummimischung besteht, welcher zumindest einen im Reifen verlaufenden und elektrisch leitfähigen Bauteil, der eine elektrisch leitende Verbindung zur Außenseite des Reifens bildet oder mitbildet, mit der Felge verbindet.

Ferner beschreibt die EP 2738022A1 einen Reifen umfassend Durchdringungsabschnitte, eine Unterlauffläche, einen Gürtel, eine Karkasse und Nieten.

Eine Aufgabe, die der Erfindung zugrunde liegt, besteht darin, einen Fahrzeugluftreifen in radialer Bauart bereitzustellen, der den Zielkonflikt zwischen lateraler Steifigkeit und Rollwiderstand löst und insbesondere einen verbesserten Rollwiderstand aufweist, ohne die laterale Steifigkeit signifikant zu verschlechtern.

Gelöst wird diese Aufgabe erfindungsgemäß durch einen Fahrzeugluftreifen in radialer Bauart, umfassend
- zwei Wulstbereiche mit Wulstkernen,
- eine um die Wulstkerne verlaufende Karkasseinlage mit sich in Richtung Seitenwände erstreckenden Karkasshochschlägen,
- mindestens einen Felgengummi, welcher die äußere Oberfläche eines Wulstbereiches bildet und aus einem ersten aus einer ersten Gummimischung bestehenden Felgengummiteil und einem zweiten aus einer zweiten Gummimischung bestehenden Felgengummiteil besteht, wobei
   - der erste Felgengummiteil entlang des Karkasshochschlages verläuft und
   - der zweite Felgengummiteil so ausgebildet ist, dass er nach dem Aufziehen auf eine Felge zumindest teilweise zwischen den Wulstkernen und der Felge angeordnet ist,
dadurch gekennzeichnet, dass
die erste Gummimischung eine Rückprallelastizität bei 20 °C gemäß DIN 53512 im Bereich von 20 % und 80 % aufweist und die Rückprallelastizität der zweiten Gummimischung, ebenfalls gemessen bei 20 °C gemäß DIN 53512, sich von der Rückprallelastizität der ersten Gummimischung unterscheidet.

In EP 2500188 A1 wird der Rollwiderstand durch das Verkleinern von Gummiteilen (s. [0023] in EP 2500188 A1) verbessert. Dies hat jedoch den Nachteil, dass dies unweigerlich auch zu einer Verschlechterung der lateralen Steifigkeit aufgrund des fehlenden Gummiteils führt. Es besteht somit gemäß dem Dokument EP 2500188 A1 ein Zielkonflikt zwischen dem Rollwiderstand und der lateralen Steifigkeit bei der Herstellung eines Felgengummis eines Fahrzeugluftreifens.

Überraschenderweise wurde im Rahmen der vorliegenden Form Erfindung herausgefunden, dass durch die präzise Einstellung der Rückprallelastizität der beiden Felgengummiteile eines erfindungsgemäßen Fahrzeugluftreifens
- der Rollwiderstand verbessert werden kann, ohne dass die laterale Steifigkeit des Fahrzeugluftreifens abnimmt,
   oder
- die laterale Steifigkeit verbessert werden kann, ohne dass der Rollwiderstand des Fahrzeugluftreifens abnimmt.

Durch das Einstellen der Rückprallelastizität der beiden Felgengummiteile eines Felgengummis eines erfindungsmäßen Fahrzeugluftreifens konnte der vorstehend beschriebene Zielkonflikt somit entkoppelt werden. Dies stellt einen überraschenden technischen Effekt dar.

Im Rahmen der vorliegenden Erfindung umfasst der Ausdruck "Gummimischung" vulkanisierte und unvulkanisierten Kautschukmischungen, insbesondere vulkanisierte Kautschukmischungen.

Bevorzugt ist eine erfindungsgemäße Vorrichtung wie vorstehend beschrieben oder wie vorstehend als bevorzugt beschrieben, wobei ausschließlich der zweite Felgengummiteil jedes Felgengummis die äußere Oberfläche des jeweiligen Wulstbereiches, in dem der jeweilige Felgengummi angeordnet ist, bildet.

Ein Vorteil des vorstehend beschriebenen Aspekts der vorliegenden Erfindung ist, dass die laterale Steifigkeit gegenüber Fahrzeugluftreifen, bei denen das zweite Felgengummiteil nicht die gesamte äußere Oberfläche des Wulstbereiches bildet, verbessert werden kann.

Bevorzugt ist eine erfindungsgemäße Vorrichtung wie vorstehend beschrieben oder wie vorstehend als bevorzugt beschrieben, wobei der Fahrzeugluftreifen jeweils einen Felgengummi in jedem der zwei Wulstbereiche des Fahrzeugluftreifens aufweist, wobei jeder der beiden Felgengummis jeweils die äußere Oberfläche des Wulstbereiches bildet und aus einem ersten aus einer ersten Gummimischung bestehenden Felgengummiteil und einem zweiten aus einer zweiten Gummimischung bestehenden Felgengummiteil besteht, wobei
- die erste Gummimischung des einen Felgengummis die gleiche Gummimischung wie die erste Gummimischung des anderen Felgengummis ist,
- die zweite Gummimischung des einen Felgengummis die gleiche Gummimischung wie die zweite Gummimischung des anderen Felgengummis ist,
- der erste Felgengummiteil jedes Felgengummis entlang des jeweiligen Karkasshochschlages verläuft und
- der zweite Felgengummiteil jedes Felgengummis so ausgebildet ist, dass der zweite Felgengummiteil nach dem Aufziehen auf eine Felge zumindest teilweise zwischen dem jeweiligen Wulstkern und der Felge angeordnet ist,
wobei bevorzugt ausschließlich der zweite Felgengummiteil des jeweiligen Felgengummis die äußere Oberfläche des Wulstbereiches, in dem der jeweilige Felgengummi angeordnet ist, bildet.

Bevorzugt ist eine erfindungsgemäße Vorrichtung wie vorstehend beschrieben oder wie vorstehend als bevorzugt beschrieben, wobei das Verhältnis zwischen der Rückprallelastizität der ersten Gummimischung und der Rückprallelastizität der zweiten Gummimischung im Bereich von 1:2 bis 2:1 liegt, bevorzugt im Bereich von 1,01:1 bis 2:1, besonders bevorzugt im Bereich von 1,1:1 bis 1,5:1.

Ein Vorteil des vorstehend beschriebenen Aspekts der vorliegenden Erfindung ist, dass der Rollwiderstand sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste Gummimischung des ersten Felgengummiteils einen natürlichen Kautschuk und/oder einen Butadienkautschuk aufweist oder aus natürlichem Kautschuk und Butadienkautschuk besteht.

Ein Vorteil des vorstehend beschriebenen Aspekts der vorliegenden Erfindung ist, dass der Rollwiderstand sich insbesondere bei solchen Felgengummis im Vergleich zu Felgengummis, welche andere Kautschukarten aufweisen, verbessert.

Bevorzugt ist eine erfindungsgemäße Vorrichtung wie vorstehend beschrieben oder wie vorstehend als bevorzugt beschrieben, wobei die erste und/oder zweite Gummimischung einen natürlichen Kautschuk in Mengen von 10 bis 50 phr und/oder einen Butadienkautschuk in Mengen von 50 bis 90 phr aufweist, bevorzugt einen natürlichen Kautschuk in Mengen von 15 bis 35 phr und/oder einen Butadienkautschuk in Mengen von 65 bis 85 phr.

Ein Vorteil des vorstehend beschriebenen Aspekts der vorliegenden Erfindung ist, dass der Rollwiderstand sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die die erste und/oder zweiten Gummimischung einen Füllstoff, bevorzugt Ruß, aufweist, wobei der Füllstoff besonders bevorzugt in einer Menge von 20 bis 180 phr vorliegt, ganz besonders bevorzugt in einer Menge von 40 bis 110 phr, insbesondere ganz besonders bevorzugt in einer Menge von 60 bis 80 phr.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste und/oder zweiten Gummimischung Zinkoxid und Stearinsäure aufweist, wobei bevorzugt die Gesamtmenge an Zinkoxid und Stearinsäure im Bereich von 1 bis 30 phr ist, besonders bevorzugt in einer Menge von 1 bis 20 phr, ganz besonders bevorzugt in einer Menge von 5 bis 9 phr.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste und/oder zweiten Gummimischung Zinkoxid und Stearinsäure aufweist, wobei die Gesamtmenge an Zinkoxid und Stearinsäure in der zweiten Gummimischung im Bereich von 5 bis 9 phr ist und die Gesamtmenge an Zinkoxid und Stearinsäure in der ersten Gummimischung im Bereich von 10 bis 15 phr ist.

Ein Vorteil des vorstehend beschriebenen Aspekts der vorliegenden Erfindung ist, dass der Rollwiderstand bei erfindungsgemäßen Fahrzeugluftreifen mit den vorstehend beschriebenen Felgengummiteilen gegenüber anderen erfindungsmäßen Fahrzeugluftreifen noch weiter verbessert wird, während die laterale Steifigkeit nicht verschlechtert wird.

Bevorzugt ist eine erfindungsgemäße Vorrichtung wie vorstehend beschrieben oder wie vorstehend als bevorzugt beschrieben, wobei die erste und/oder zweiten Gummimischung Schwefel aufweist, wobei die Gesamtmenge an Schwefel bevorzugt im Bereich von 1 bis 10 phr ist, besonders bevorzugt in einer Menge von 1 bis 5 phr.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste und/oder zweiten Gummimischung Schwefel aufweist, wobei die Gesamtmenge an Schwefel in der zweiten Gummimischung des zweiten Felgengummiteils im Bereich von 1 bis 2,5 phr ist und die Gesamtmenge an Schwefel in der ersten Gummimischung des ersten Felgengummiteils im Bereich von 3 bis 5 phr ist.

Ein Vorteil des vorstehend beschriebenen Aspekts der vorliegenden Erfindung ist, dass der Rollwiderstand bei erfindungsgemäßen Fahrzeugluftreifen mit den vorstehend beschriebenen Felgengummiteilen gegenüber anderen erfindungsmäßen Fahrzeugluftreifen noch weiter verbessert wird, während die laterale Steifigkeit nicht verschlechtert wird.

Bevorzugt ist eine erfindungsgemäße Vorrichtung wie vorstehend beschrieben oder wie vorstehend als bevorzugt beschrieben, wobei die erste und/oder zweiten Gummimischung weitere Vulkanisationsmittel außer Schwefel aufweist, wobei die Gesamtmenge an den weiteren Vulkanisationsmittel bevorzugt im Bereich von 1 bis 10 phr ist, besonders bevorzugt in einer Menge von 3 bis 6 phr.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste Gummimischung des ersten Felgengummiteils ein Harz aufweist, wobei der Harz bevorzugt in einer Menge von 1 bis 30 phr vorliegt, besonders bevorzugt in einer Menge von 5 bis 15 phr, ganz besonders bevorzugt in einer Menge von 1 bis 9 phr,

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste und/oder zweite Gummimischung ein Harz aufweist, wobei das Harz bevorzugt in einer Menge von 0 bis 4 phr vorliegt und besonders bevorzugt gar kein Harz in der zweiten Gummimischung vorliegt.

Ein Vorteil des vorstehend beschriebenen Aspekts der vorliegenden Erfindung ist, dass der Rollwiderstand bei erfindungsgemäßen Fahrzeugluftreifen mit den vorstehend beschriebenen Felgengummiteilen gegenüber anderen erfindungsmäßen Fahrzeugluftreifen noch weiter verbessert wird, während die laterale Steifigkeit nicht verschlechtert wird.

Bevorzugt ist eine erfindungsgemäße Vorrichtung wie vorstehend beschrieben oder wie vorstehend als bevorzugt beschrieben, wobei
- die erste Gummimischung eine Shore-Härte im Bereich von 60 Sh-A bis 130 Sh-A aufweist, bevorzugt eine Shore-Härte im Bereich von 60 Sh-A bis 80 Sh-A, gemessen bei 20 °C mittels Durometer gemäß DIN ISO 7619-1, wobei das Verhältnis zwischen der Shore-Härte der ersten Gummimischung und der Shore-Härte der zweiten Gummimischung bevorzugt im Bereich von 1:2 bis 4:1 liegt, besonders bevorzugt im Bereich von 1:1,5 bis 2:1, ganz besonders bevorzugt im Bereich von 1:1,1 bis 1,5:1, insbesondere ganz besonders bevorzugt im Bereich von 1:1,1 bis 1,1:1.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die zweite Gummimischung eine Shore-Härte von größer als 30 Sh-A aufweist, bevorzugt eine Shore-Härte im Bereich von 40 Sh-A bis 89 Sh-A, besonders bevorzugt eine Shore-Härte im Bereich von 65 Sh-A bis 80 Sh-A, jeweils gemessen bei 20 °C mittels Durometer gemäß DIN ISO 7619-1, wobei das Verhältnis zwischen der Shore-Härte der ersten Gummimischung und der Shore-Härte der zweiten Gummimischung bevorzugt im Bereich von 1:2 bis 4:1 liegt, besonders bevorzugt im Bereich von 1:1,5 bis 2:1, ganz besonders bevorzugt im Bereich von 1:1,1 bis 1,5:1, insbesondere ganz besonders bevorzugt im Bereich von 1:1,1 bis 1,1:1.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei
- die erste Gummimischung eine Shore-Härte im Bereich von 60 Sh-A bis 130 Sh-A aufweist, bevorzugt eine Shore-Härte im Bereich von 60 Sh-A bis 80 Sh-A, gemessen bei 20 °C mittels Durometer gemäß DIN ISO 7619-1, wobei das Verhältnis zwischen der Shore-Härte der ersten Gummimischung und der Shore-Härte der zweiten Gummimischung bevorzugt im Bereich von 1:2 bis 4:1 liegt, besonders bevorzugt im Bereich von 1:1,5 bis 2:1, ganz besonders bevorzugt im Bereich von 1:1,1 bis 1,5:1, insbesondere ganz besonders bevorzugt im Bereich von 1:1,1 bis 1,1:1,
   und
- die zweite Gummimischung eine Shore-Härte von größer als 30 Sh-A aufweist, bevorzugt eine Shore-Härte im Bereich von 40 Sh-A bis 89 Sh-A, besonders bevorzugt eine Shore-Härte im Bereich von 65 Sh-A bis 80 Sh-A, jeweils gemessen bei 20 °C mittels Durometer gemäß DIN ISO 7619-1, wobei das Verhältnis zwischen der Shore-Härte der ersten Gummimischung und der Shore-Härte der zweiten Gummimischung bevorzugt im Bereich von 1:2 bis 4:1 liegt, besonders bevorzugt im Bereich von 1:1,5 bis 2:1, ganz besonders bevorzugt im Bereich von 1:1,1 bis 1,5:1, insbesondere ganz besonders bevorzugt im Bereich von 1:1,1 bis 1,1:1.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei das Verhältnis zwischen der Shore-Härte der ersten Gummimischung und der Shore-Härte der zweiten Gummimischung im Bereich von 1:2 bis 4:1 liegt, bevorzugt im Bereich von 1:1,5 bis 2:1, besonders bevorzugt im Bereich von 1:1,1 bis 1,5:1, ganz besonders bevorzugt im Bereich von 1:1,1 bis 1,1:1.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei die erste Gummimischung eine Shore-Härte im Bereich von 60 Sh-A bis 130 Sh-A und die zweite Gummimischung eine Shore-Härte von größer als 30 Sh-A aufweist, bevorzugt die erste Gummimischung eine Shore-Härte im Bereich von 60 Sh-A bis 130 Sh-A und die zweite Gummimischung eine Shore-Härte im Bereich von 40 Sh-A bis 89 Sh-A, ganz bevorzugt die erste Gummimischung eine Shore-Härte im Bereich von 60 Sh-A bis 80 Sh-A und die zweite Gummimischung eine Shore-Härte im Bereich von 65 Sh-A bis 80 Sh-A, gemessen bei 20 °C mittels Durometer gemäß DIN ISO 7619-1.

Ein Vorteil des vorstehend beschriebenen Aspekts der vorliegenden Erfindung ist, dass die laterale Steifigkeit sich gemäß der Reihenfolge der vorstehend beschriebenen Bereiche immer weiter verbessert.

Bevorzugt ist eine erfindungsgemäße Vorrichtung wie vorstehend beschrieben oder wie vorstehend als bevorzugt beschrieben, wobei
- die erste Gummimischung eine Rückprallelastizität von größer als 50 % aufweist, bevorzugt im Bereich von über 50 % bis 90 %, besonders bevorzugt im Bereich von über 65 % bis 80 %, gemessen bei 20 °C gemäß DIN 53512,
   und/oder
- die zweite Gummimischung eine Rückprallelastizität von kleiner als 80 % aufweist, bevorzugt im Bereich von 20 % bis 64 %, bevorzugt im Bereich von 55 % bis 64 %, jeweils gemessen bei 20 °C gemäß DIN 53512.

Ein Vorteil des vorstehend beschriebenen Aspekts der vorliegenden Erfindung ist, dass der Rollwiderstand bei erfindungsgemäßen Fahrzeugluftreifen mit den vorstehend beschriebenen Felgengummiteilen gegenüber anderen erfindungsmäßen Fahrzeugluftreifen noch weiter verbessert wird, während die laterale Steifigkeit nicht verschlechtert wird.

Bevorzugt ist eine erfindungsgemäße Vorrichtung wie vorstehend beschrieben oder wie vorstehend als bevorzugt beschrieben, wobei das Verhältnis zwischen der Breite des ersten Felgengummiteil zu der Höhe des ersten Felgengummiteil im Bereich von 1:1 bis 1:10 liegt, bevorzugt im Bereich von 1:3 bis 1:7.

Ein Vorteil des vorstehend beschriebenen Aspekts der vorliegenden Erfindung ist, dass erfindungsgemäße Fahrzeugluftreifen mit den vorstehend beschriebenen Verhältnissen einen noch besseren Rollwiderstand und/oder eine noch bessere lateralen Steifigkeit gegenüber anderen erfindungsgemäßen Fahrzeugluftreifen aufweisen.

Bevorzugt ist eine erfindungsgemäße Vorrichtung wie vorstehend beschrieben oder wie vorstehend als bevorzugt beschrieben, wobei das Verhältnis zwischen der Höhe des ersten Felgengummiteil zu der nominale Höhe des Fahrzeugluftreifens im Bereich von 1:1 bis 1:10 liegt, bevorzugt im Bereich von 1:3 bis 1:7.

Ein Vorteil des vorstehend beschriebenen Aspekts der vorliegenden Erfindung ist, dass erfindungsgemäße Fahrzeugluftreifen mit den vorstehend beschriebenen Verhältnissen einen noch besseren Rollwiderstand und/oder eine noch bessere lateralen Steifigkeit gegenüber anderen erfindungsgemäßen Fahrzeugluftreifen aufweisen.

In besonders hohem Maße bevorzugt ist ein erfindungsgemäßer Fahrzeugluftreifen wie vorstehend beschrieben, umfassend:
- zwei Wulstbereiche mit Wulstkernen,
- eine um die Wulstkerne verlaufende Karkasseinlage mit sich in Richtung Seitenwände erstreckenden Karkasshochschlägen,
- jeweils einen Felgengummi in jedem der beiden Wulstbereiche des Fahrzeugluftreifens aufweist, wobei jeder der beiden Felgengummis jeweils die äußere Oberfläche des Wulstbereiches bildet und aus einem ersten aus einer ersten Gummimischung bestehenden Felgengummiteil und einem zweiten aus einer zweiten Gummimischung bestehenden Felgengummiteil besteht, wobei
   - der erste Felgengummiteil jedes Felgengummis entlang des Karkasshochschlages verläuft und
   - der zweite Felgengummiteil jedes Felgengummis so ausgebildet ist, dass er nach dem Aufziehen auf eine Felge zumindest teilweise zwischen den Wulstkernen und der Felge angeordnet ist,
dadurch gekennzeichnet, dass
die erste Gummimischung eine Rückprallelastizität bei 20 °C gemäß DIN 53512 aufweist, die zwischen 20 % und 80 %, bevorzugt zwischen 65 % bis 80 %, beträgt, wobei
- die erste und zweite Gummimischung aus natürlichem Kautschuk und Butadienkautschuk besteht und einen natürlichen Kautschuk in Mengen von 15 bis 35 phr und einen Butadienkautschuk in Mengen von 65 bis 85 phr aufweist,
- die erste Gummimischung des ersten Felgengummiteils Ruß aufweist, wobei der Ruß in einer Menge von 50 bis 110 phr vorliegt,
- die Gesamtmenge an Zinkoxid und Stearinsäure in der zweiten Gummimischung des zweiten Felgengummiteils im Bereich von 5 bis 9 phr ist und die Gesamtmenge an Zinkoxid und Stearinsäure in der ersten Gummimischung des ersten Felgengummiteils im Bereich von 10 bis 15 phr ist,
- die Gesamtmenge an Schwefel in der zweiten Gummimischung des zweiten Felgengummiteils im Bereich von 1 bis 2,5 phr ist und die Gesamtmenge an Schwefel in der ersten Gummimischung des ersten Felgengummiteils im Bereich von 3 bis 5 phr ist,
- die erste Gummimischung des ersten Felgengummiteils optional weitere Vulkanisationsmittel außer Schwefel aufweist, wobei die Gesamtmenge an den weiteren Vulkanisationsmittel im Bereich von 3 bis 6 phr ist,
- die erste und zweite Gummimischung gar kein Harz vorliegt,
- das Verhältnis zwischen der Breite des ersten Felgengummiteil zu der Höhe des ersten Felgengummiteil im Bereich von 1:1 bis 1:10 liegt,
   und
- das Verhältnis zwischen der Höhe des ersten Felgengummiteil zu der nominale Höhe des Fahrzeugluftreifens im Bereich von 1:1 bis 1:10 liegt.

In besonders hohem Maße bevorzugt ist auch ein erfindungsgemäßer Fahrzeugluftreifen wie vorstehend beschrieben, umfassend:
- zwei Wulstbereiche mit Wulstkernen,
- eine um die Wulstkerne verlaufende Karkasseinlage mit sich in Richtung Seitenwände erstreckenden Karkasshochschlägen,
- jeweils einen Felgengummi in jedem der beiden Wulstbereiche des Fahrzeugluftreifens aufweist, wobei jeder der beiden Felgengummis jeweils die äußere Oberfläche des Wulstbereiches bildet und aus einem ersten aus einer ersten Gummimischung bestehenden Felgengummiteil und einem zweiten aus einer zweiten Gummimischung bestehenden Felgengummiteil besteht, wobei
   - der erste Felgengummiteil jedes Felgengummis entlang des Karkasshochschlages verläuft und
   - der zweite Felgengummiteil jedes Felgengummis so ausgebildet ist, dass er nach dem Aufziehen auf eine Felge zumindest teilweise zwischen den Wulstkernen und der Felge angeordnet ist,
dadurch gekennzeichnet, dass
die erste Gummimischung eine Rückprallelastizität bei 20 °C gemäß DIN 53512 aufweist, die im Bereich von über 65 % bis 80 % beträgt,
wobei
- die erste und zweite Gummimischung aus natürlichem Kautschuk und Butadienkautschuk besteht,
- die zweite Gummimischung eine Shore-Härte im Bereich von 65 Sh-A bis 80 Sh-A aufweist,
- die erste Gummimischung eine Shore-Härte im Bereich von 60 Sh-A bis 80 Sh-A aufweist, gemessen bei 20 °C mittels Durometer gemäß DIN ISO 7619-1,
- die zweite Gummimischung des ersten Felgengummiteils eine Rückprallelastizität im Bereich von 20 % bis 65 % aufweist, gemessen bei 20 °C gemäß DIN 53512,
- das Verhältnis zwischen der Breite des ersten Felgengummiteil zu der Höhe des ersten Felgengummiteil im Bereich von 1:1 bis 1:10 liegt,
   und
- das Verhältnis zwischen der Höhe des ersten Felgengummiteil zu der nominale Höhe des Fahrzeugluftreifens im Bereich von 1:1 bis 1:10 liegt.

Die vorstehend beschriebenen vorteilhaften Aspekte eines erfindungsgemäßen Fahrzeugluftreifens in radialer Bauart gelten auch für sämtliche Aspekte eines nachstehend beschriebenen Fahrzeugradsystems und die nachstehend diskutierten vorteilhaften Aspekte erfindungsgemäßer Fahrzeugradsysteme gelten entsprechend für sämtliche Aspekte eines erfindungsgemäßen Fahrzeugluftreifens in radialer Bauart.

Die Erfindung betrifft auch ein Fahrzeugradsystem, umfassend eine Felge und einen auf die Felge aufgezogenen Fahrzeugluftreifen wie vorstehend beschrieben oder wie vorstehend als bevorzugt beschrieben, wobei der zweite Felgengummiteil des Fahrzeugluftreifens zumindest teilweise zwischen den Wulstkernen und der Felge angeordnet ist.

Bevorzugt ist ein erfindungsgemäßes Fahrzeugradsystem wie vorstehend beschrieben oder wie vorstehend als bevorzugt beschrieben, wobei sich der erste Felgengummiteil in Richtung Seitenwand über das Felgenhorn der Felge hinaus und in Kontakt mit diesem erstreckt.

Ein Vorteil des vorstehend beschriebenen Aspekts der vorliegenden Erfindung ist, dass die laterale Steifigkeit gegenüber Fahrzeugluftreifen, bei denen das zweite Felgengummiteil nicht in Richtung Seitenwand über das Felgenhorn der Felge hinaus und in Kontakt mit diesem erstreckt, verbessert werden kann.

Die vorstehend beschriebenen vorteilhaften Aspekte eines erfindungsgemäßen Fahrzeugluftreifens in radialer Bauart und eines erfindungsgemäßen Fahrzeugradsystems gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte eines erfindungsgemäßen Fahrzeugluftreifens in radialer Bauart und eines erfindungsgemäßen Fahrzeugradsystems.

Die Erfindung betrifft auch eine Herstellung eines Fahrzeugluftreifens wie vorstehend beschrieben oder wie vorstehend als bevorzugt beschrieben oder eines Fahrzeugradsystems wie vorstehend beschrieben oder wie vorstehend als bevorzugt beschrieben.

### Figurenbeschreibung:

Es zeigt:
- Figur 1:: Eine Querschnittsansicht durch einen Wulstbereich eines erfindungsgemäßen Fahrzeugradsystems in einer ersten Ausführungsform, wobei der zweite Felgengummiteil des Felgengummis die gesamte äußere Oberfläche des Wulstbereiches bildet;
- Figur 2:: Eine Querschnittsansicht durch einen Wulstbereich eines erfindungsgemäßen Fahrzeugradsystems in einer ersten Ausführungsform, wobei der erste Felgengummiteil den einen Teil der äußere Oberfläche des Wulstbereiches bildet und der zweite Felgengummiteil des Felgengummis den anderen Teil der äußere Oberfläche des Wulstbereiches bildet.

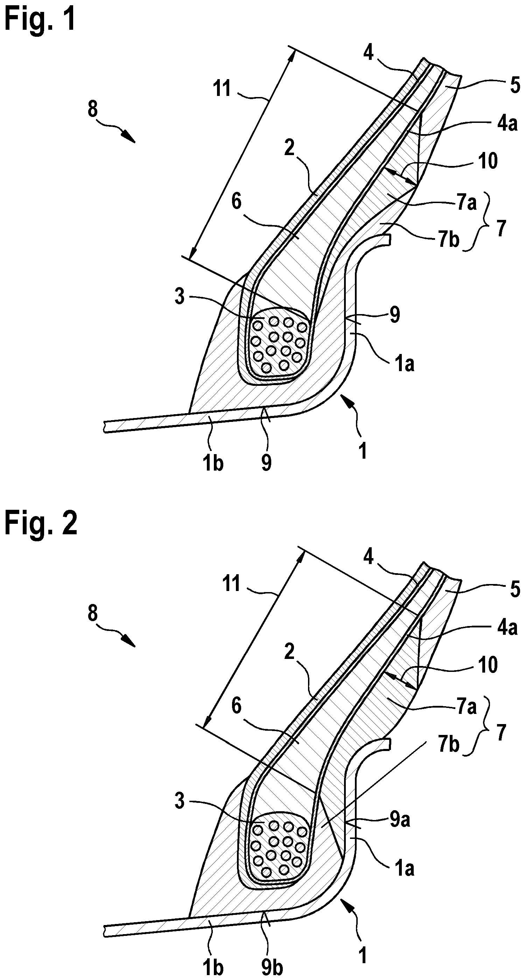

Figur 1 zeigt eine schematische Darstellung eines Wulstbereiches 8 eines erfindungsgemäßen Fahrzeugradsystems in einer ersten Ausführungsform, umfassend:
- einen Wulstkern 3,
- eine um den Wulstkern 3 verlaufende Karkasseinlage 4 mit einem sich in Richtung Seitenwand 5 erstreckenden Karkasshochschlag 4a,
- einen Felgengummi 7 aus einem ersten und einem zweiten Felgengummiteil 7a, 7b, wobei der zweite Felgengummiteil 7b des Felgengummis 7 die gesamte äußere Oberfläche 9 des Wulstbereiches 8 bildet und aus einer zweiten Gummimischung besteht und der erste Felgengummi 7a aus einer ersten Gummimischung besteht, wobei
   - der erste Felgengummiteil 7a des Felgengummis 7 entlang des Karkasshochschlages 4a verläuft und
   - der zweite Felgengummiteil 7b des Felgengummis 7 zwischen dem Wulstkern 3 und der Felge 1 angeordnet ist,
wobei
- sich der erste Felgengummiteil 7a in Richtung Seitenwand 5 über das Felgenhorn 1a der Felge 1 hinaus und in Kontakt mit diesem Felgenhorn 1a erstreckt,
- das Verhältnis zwischen der Breite 10 des ersten Felgengummiteil 7a zu der Höhe 11 des ersten Felgengummiteil 7a im Bereich von 1:1 bis 1:10 liegt
   und
- das Verhältnis zwischen der Höhe 11 des ersten Felgengummiteil 7a zu der nominale Höhe des Fahrzeugluftreifens im Bereich von 1:1 bis 1:10 liegt.

In Figur 1 sind zu dem das Kernprofil 6 und die Innenschicht 2 des erfindungsgemäßen Fahrzeugluftreifens sowie der andere Teil der Felge 1 der Felgenabschnitt 1b gezeigt.

Figur 2 zeigt eine schematische Darstellung eines Wulstbereiches 8 eines erfindungsgemäßen Fahrzeugradsystems in einer weiteren Ausführungsform, umfassend:
- einen Wulstkern 3,
- eine um den Wulstkern 3 verlaufende Karkasseinlage 4 mit einem sich in Richtung Seitenwand 5 erstreckenden Karkasshochschlag 4a,
- einen Felgengummi 7 aus einem ersten und einem zweiten Felgengummiteil 7a, 7b, wobei
   - der erste Felgengummiteil 7a aus einer ersten Gummimischung besteht und den einen Teil 9a der äußere Oberfläche 9 des Wulstbereiches 8 bildet und
   - der zweite Felgengummiteil 7b des Felgengummis 7 den anderen Teil 9b der äußere Oberfläche 9 des Wulstbereiches 8 bildet und aus einer zweiten Gummimischung besteht,
   wobei
   - der erste Felgengummiteil 7a des Felgengummis 7 entlang des Karkasshochschlages 4a verläuft und
   - der zweite Felgengummiteil 7b des Felgengummis 7 zwischen dem Wulstkern 3 und der Felge 1 angeordnet ist.

In Figur 2 sind zu dem das Kernprofil 6 und die Innenschicht 2 des erfindungsgemäßen Fahrzeugluftreifens sowie der andere Teil der Felge 1 der Felgenabschnitt 1b gezeigt.

### Experimentelle Beispiele:

### Messmethoden:

### 1. Shore-A-Härte

Die Ergebnisse wurden bei 20 °C mittels Durometer gemäß DIN ISO 7619-1 ermittelt.

### 2. Rückprallelastizität

Die Ergebnisse wurden bei 20 °C in Anlehnung an die Methode DIN 53512 ermittelt.

### 3. Rollwiderstand

Die Ergebnisse wurden in Anlehnung an die Methode ISO 28580 ermittelt.

### 4. Laterale Steifigkeit Cy

Die Ergebnisse wurden in Anlehnung an die Methode wie in Absatz [0028] der Patentschrift DE 102013004596 B4 ermittelt.

### Herstellung:

Herstellung einer Gummimischung eines erfindungsgemäßen Reifens:
Die Herstellung der Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt.

Herstellung eines erfindungsgemäßen Reifens:
Die wie vorstehend angegebenen Kautschukmischungen wurden anschließend in einem Standardreifen mit dem Produktnamen CEC6 auf herkömmliche und bekannte Weise eingefügt. Daraufhin wurden die so erhaltenden Reifen auf ihren Rollwiderstand und ihrer laterale Steifigkeit gemäß den jeweils angegebenen Messmethoden geprüft.

### Ergebnisse:

**Tabelle 1: Experimentelle Daten der verwendeten Gummimischungen für die Verwendung in Felgengummis der erfindungsgemäßen und nicht erfindungsgemäßen Fahrzeugluftreifen gemäß der nachstehenden Tabelle 2**

| **Kautschukmischungen** | **Name:** | **E1** | **E2** | **E3** |
|---|---|---|---|---|
| | | | | |

| **Bestandteile** | **Einheit** | | | |
|---|---|---|---|---|
| | | | | |
| Naturkautschuk | phr | 25 | 25 | 25 |
| Butadienkautschuk | phr | 75 | 75 | 75 |
| Ruß | phr | 65 | 55 | 70 |
| Alterungsschutzmittel und Prozesshilfsmittel | phr | 10 | 10 | 10 |
| Harz | phr | 0 | 0 | 10 |
| Zinkoxid und Stearinsäure | phr | 6 | 6 | 10 |
| Vulkanisations-beschleuni ger | phr | 4 | 4 | 4 |
| Schwefel | phr | 1 | 3,5 | 3,5 |
| | | | | |

| **Mischungseigenschafte n** | | | | |
|---|---|---|---|---|
| Shore-A-Härte | Sh-A | 73 | 73 | 90 |
| Rückprallelastizität | % | 58 | 73 | 40 |

**Tabelle 2: Experimentelle Daten der erfindungsgemäßen und nicht erfindungsgemäßen Fahrzeugluftreifen mit den verschiedenen Felgengummis, auch Rim-Strips genannt.**

| **Fahrzeugluftreifen** | **Name:** | **Multi2** | **Single1** | **Multi1** |
|---|---|---|---|---|
| | | Erfind.-gemäß | Nicht erfind.-gemäß | Erfind.-gemä ß |
| | | | | |

| **Kautschukmischungen der Felgengummiteile** | | | | |
|---|---|---|---|---|
| Gummimischung des 1. Felgengummiteils* | 7a | E3 | E1 | E2 |
| Gummimischung des 2. Felgengummiteils** | 7b | E1 | E1 | E1 |
| | | | | |

| **Reifeneigenschaften** | **Einheit** | | | |
|---|---|---|---|---|
| Laterale Steifigkeit | % | 125 | 100 | 100 |
| Rollwiderstand | % | 98 | 100 | 103 |

| | | | | |
|---|---|---|---|---|
| * Das erste Felgengummiteil entspricht dem Wulstteil eines Fahrzeugreifen, welches in der vorstehenden Bezugszeichenliste und in der Figur 1 mit dem Bezugszeichen 7a bezeichnet ist. ** Das zweite Felgengummiteil entspricht dem Wulstteil eines Fahrzeugreifen, welches in der vorstehenden Bezugszeichenliste und in der Figur 1 mit dem Bezugszeichen 7a bezeichnet ist. | | | | |

In Tab. 2 sind die Vorteile eines erfindungsgemäßen Fahrzeugluftreifens bestens zu erkennen. Je nach Anforderung an einen erfindungsmäßen Fahrzeugluftreifen kann
1. dessen Rollwiderstand durch Anpassung der Shore-Härte der Gummimischung des ersten Felgengummiteils (vergleiche die Spalten Single1 und Multi2 in Tabelle 2)
   und/oder
2. dessen laterale Steifigkeit durch Anpassen der Rückprallelastizität der Gummimischung des ersten Felgengummiteils (vergleiche die Spalten Single1 und Multi2 in Tabelle 2)

### verbessert werden.

Durch die Erhöhung der Rückprallelastizität der Gummimischung des ersten Felgengummiteils kann daher der gewünschte Rollwiderstand eines erfindungsgemäßen Fahrzeugluftreifens verbessert werden (vergleiche die Spalten E1 und E2 in Tabelle 1). Es ist jedoch auch möglich, durch die Erhöhung der Shore-Härte der Gummimischung des ersten Felgengummiteils die laterale Steifigkeit eines erfindungsgemäßen Fahrzeugluftreifens zu erhöhen (vergleiche die Spalten E1 und E3 in Tabelle 1). Dies ermöglicht sowohl den Rollwiderstand als auch die laterale Steifigkeit eines erfindungsgemäßen Fahrzeugreifens genau einzustellen. Insbesondere ist es möglich Fahrzeugluftreifen mit einer erhöhten lateralen Steifigkeit ohne einer Verschlechterung des Rollwiderstandes herzustellen (vergleiche die Spalten Single1 und Multi1 in Tabelle 2).

### Bezugszeichenliste

- 1: Felge eines erfindungsgemäßen Fahrzeugradsystems
- 1a: Felgenhorn
- 1b: Felgenabschnitt
- 2: Innenschicht
- 3: Wulstkern
- 4: Karkasseinlage
- 4a: Karkasshochschlag
- 5: Seitenwand
- 6: Kernprofil
- 7, 7': Felgengummi im jeweiligen Wulstbereich der zwei Wulstbereiche eines erfindungsgemäßen Fahrzeugluftreifens
- 7a: erster Felgengummiteil aus erster Gummimischung
- 7b: zweiter Felgengummiteil aus zweiter Gummimischung
- 8: Wulstbereich eines erfindungsgemäßen Fahrzeugluftreifens eines erfindungsgemäßen Fahrzeugradsystems
- 9: äußere Oberfläche des Wulstbereiches
- 9a: ein Teil der äußere Oberfläche des Wulstbereiches
- 9b: anderer Teil der äußere Oberfläche des Wulstbereiches
- 10: Breite des ersten Felgengummiteil
- 11: Höhe des ersten Felgengummiteil

## Patentansprüche

1. Fahrzeugluftreifen in radialer Bauart, umfassend
- zwei Wulstbereiche (8) mit Wulstkernen (3),
- eine um die Wulstkerne (3) verlaufende Karkasseinlage (4) mit sich in Richtung Seitenwände (5) erstreckenden Karkasshochschlägen (4a),
- mindestens einen Felgengummi (7), welcher die äußere Oberfläche (9) eines Wulstbereiches (8) bildet und aus einem ersten aus einer ersten Gummimischung bestehenden Felgengummiteil (7a) und einem zweiten aus einer zweiten Gummimischung bestehenden Felgengummiteil (7b) besteht, wobei
- der erste Felgengummiteil (7a) entlang des Karkasshochschlages (4a) verläuft und
- der zweite Felgengummiteil (7b) so ausgebildet ist, dass er nach dem Aufziehen auf eine Felge (1) zumindest teilweise zwischen den Wulstkernen (3) und der Felge (1) angeordnet ist,
**dadurch gekennzeichnet, dass**
die erste Gummimischung eine Rückprallelastizität bei 20 °C gemäß DIN 53512 im Bereich von 20 % und 80 % aufweist und die Rückprallelastizität der zweiten Gummimischung, ebenfalls gemessen bei 20 °C gemäß DIN 53512, sich von der Rückprallelastizität der ersten Gummimischung unterscheidet.

2. Fahrzeugluftreifen nach Anspruch 1, wobei der Fahrzeugluftreifen jeweils einen Felgengummi (7) in jedem der zwei Wulstbereiche (8) des Fahrzeugluftreifens aufweist, wobei jeder der beiden Felgengummis (7) jeweils die äußere Oberfläche (9) des Wulstbereiches (8) bildet und aus einem ersten aus einer ersten Gummimischung bestehenden Felgengummiteil (7a) und einem zweiten aus einer zweiten Gummimischung bestehenden Felgengummiteil (7b) besteht, wobei
- die erste Gummimischung des einen Felgengummis (7) die gleiche Gummimischung wie die erste Gummimischung des anderen Felgengummis (7`) ist,
- die zweite Gummimischung des einen Felgengummis (7) die gleiche Gummimischung wie die zweite Gummimischung des anderen Felgengummis (7`) ist,
- der erste Felgengummiteil (7a) jedes Felgengummis (7, 7') entlang des jeweiligen Karkasshochschlages (4a) verläuft und
- der zweite Felgengummiteil (7b) jedes Felgengummis so ausgebildet ist, dass der zweite Felgengummiteil (7b) nach dem Aufziehen auf eine Felge (1) zumindest teilweise zwischen dem jeweiligen Wulstkern (3) und der Felge (1) angeordnet ist.

3. Fahrzeugluftreifen nach einem der vorangehenden Ansprüche, wobei das Verhältnis zwischen der Rückprallelastizität der ersten Gummimischung und der Rückprallelastizität der zweiten Gummimischung im Bereich von 1:2 bis 2:1 liegt, bevorzugt im Bereich von 1,01:1 bis 2:1, besonders bevorzugt im Bereich von 1,1:1 bis 1,5:1.

4. Fahrzeugluftreifen nach einem der vorangehenden Ansprüche, wobei die erste Gummimischung einen natürlichen Kautschuk und/oder einen Butadienkautschuk aufweist oder aus natürlichem Kautschuk und Butadienkautschuk besteht und/oder die erste und/oder zweite Gummimischung einen natürlichen Kautschuk in Mengen von 10 bis 50 phr und/oder einen Butadienkautschuk in Mengen von 50 bis 90 phr aufweist, bevorzugt einen natürlichen Kautschuk in Mengen von 15 bis 35 phr und/oder einen Butadienkautschuk in Mengen von 65 bis 85 phr.

5. Fahrzeugluftreifen nach einem der vorangehenden Ansprüche, wobei die die erste und/oder zweiten Gummimischung einen Füllstoff, bevorzugt Ruß, aufweist, wobei der Füllstoff besonders bevorzugt in einer Menge von 20 bis 180 phr vorliegt, ganz besonders bevorzugt in einer Menge von 40 bis 110 phr, insbesondere ganz besonders bevorzugt in einer Menge von 60 bis 80 phr.

6. Fahrzeugluftreifen nach einem der vorangehenden Ansprüche, wobei die erste und/oder zweiten Gummimischung Zinkoxid und Stearinsäure aufweist, wobei bevorzugt die Gesamtmenge an Zinkoxid und Stearinsäure im Bereich von 1 bis 30 phr ist, besonders bevorzugt in einer Menge von 1 bis 20 phr, ganz besonders bevorzugt in einer Menge von 5 bis 9 phr oder ganz besonders bevorzugt die Gesamtmenge an Zinkoxid und Stearinsäure in der zweiten Gummimischung im Bereich von 5 bis 9 phr ist und die Gesamtmenge an Zinkoxid und Stearinsäure in der ersten Gummimischung im Bereich von 10 bis 15 phr ist.

7. Fahrzeugluftreifen nach einem der vorangehenden Ansprüche, wobei die erste und/oder zweiten Gummimischung
- Schwefel aufweist, wobei die Gesamtmenge an Schwefel bevorzugt im Bereich von 1 bis 10 phr ist, besonders bevorzugt in einer Menge von 1 bis 5 phr, wobei ganz besonders bevorzugt die Gesamtmenge an Schwefel in der zweiten Gummimischung im Bereich von 1 bis 2,5 phr ist und die Gesamtmenge an Schwefel in der ersten Gummimischung im Bereich von 3 bis 5 phr ist,
und/oder
- weitere Vulkanisationsmittel außer Schwefel aufweist, wobei die Gesamtmenge an den weiteren Vulkanisationsmittel bevorzugt im Bereich von 1 bis 10 phr ist, besonders bevorzugt in einer Menge von 3 bis 6 phr.

8. Fahrzeugluftreifen nach einem der vorangehenden Ansprüche, wobei
- die erste Gummimischung ein Harz aufweist, wobei der Harz bevorzugt in einer Menge von 1 bis 30 phr vorliegt, besonders bevorzugt in einer Menge von 5 bis 15 phr, ganz besonders bevorzugt in einer Menge von 1 bis 9 phr,
und/oder
- die erste und/oder zweite Gummimischung ein Harz aufweist, wobei das Harz bevorzugt in einer Menge von 0 bis 4 phr vorliegt und besonders bevorzugt gar kein Harz in der zweiten Gummimischung vorliegt.

9. Fahrzeugluftreifen nach einem der vorangehenden Ansprüche, wobei
- die erste Gummimischung eine Shore-Härte im Bereich von 60 Sh-A bis 130 Sh-A aufweist, bevorzugt eine Shore-Härte im Bereich von 60 Sh-A bis 80 Sh-A, gemessen bei 20 °C mittels Durometer gemäß DIN ISO 7619-1,
und/oder
- die zweite Gummimischung eine Shore-Härte von größer als 30 Sh-A aufweist, bevorzugt eine Shore-Härte im Bereich von 40 Sh-A bis 89 Sh-A, besonders bevorzugt eine Shore-Härte im Bereich von 65 Sh-A bis 80 Sh-A, jeweils gemessen bei 20 °C mittels Durometer gemäß DIN ISO 7619-1.

10. Fahrzeugluftreifen nach einem der vorangehenden Ansprüche, wobei das Verhältnis zwischen der Shore-Härte der ersten Gummimischung und der Shore-Härte der zweiten Gummimischung im Bereich von 1:2 bis 4:1 liegt, bevorzugt im Bereich von 1:1,5 bis 2:1, besonders bevorzugt im Bereich von 1:1,1 bis 1,5:1, ganz besonders bevorzugt im Bereich von 1:1,1 bis 1,1:1, jeweils gemessen bei 20 °C mittels Durometer gemäß DIN ISO 7619-1.

11. Fahrzeugluftreifen nach einem der vorangehenden Ansprüche, wobei
- die erste Gummimischung eine Rückprallelastizität von größer als 50 % aufweist, bevorzugt im Bereich von über 50 % bis 90 %, besonders bevorzugt im Bereich von über 65 % bis 80 %, gemessen bei 20 °C gemäß DIN 53512,
und/oder
- die zweite Gummimischung eine Rückprallelastizität von kleiner als 80 % aufweist, bevorzugt im Bereich von 20 % bis 64 %, bevorzugt im Bereich von 55 % bis 64 %, jeweils gemessen bei 20 °C gemäß DIN 53512.

12. Fahrzeugluftreifen nach einem der vorangehenden Ansprüche, wobei
- das Verhältnis zwischen der Breite (10) des ersten Felgengummiteil (7a) zu der Höhe (11) des ersten Felgengummiteil (7a) im Bereich von 1:1 bis 1:10 liegt, bevorzugt im Bereich von 1:3 bis 1:7,
und/oder
- das Verhältnis zwischen der Höhe (11) des ersten Felgengummiteil (7a) zu der nominale Höhe des Fahrzeugluftreifens im Bereich von 1:1 bis 1:10 liegt, bevorzugt im Bereich von 1:3 bis 1:7.

13. Fahrzeugradsystem, umfassend eine Felge (1) und einen auf die Felge (1) aufgezogenen Fahrzeugluftreifen nach einem der vorangehenden Ansprüche, wobei der zweite Felgengummiteil (7b) des Fahrzeugluftreifens zumindest teilweise zwischen den Wulstkernen (3) und der Felge (1) angeordnet ist.

14. Fahrzeugradsystem dem vorangehenden Anspruch, wobei sich der erste Felgengummiteil (7a) in Richtung Seitenwand (5) über das Felgenhorn (1a) der Felge (1) hinaus und in Kontakt mit diesem (1a) erstreckt.

15. Herstellung eines Fahrzeugluftreifens gemäß einem der vorangehenden Ansprüche 1 bis 12 oder eines Fahrzeugradsystems gemäß einem der vorangehenden Ansprüche 13 bis 14.

## Claims

1. Pneumatic vehicle tyre of a radial type of construction, comprising
- two bead regions (8) with bead cores (3),
- a carcass insert (4) running around the bead cores (3) and comprising carcass turn-ups (4a) extending in the direction of the sidewalls (5),
- at least one rubber rim strip (7), which forms the outer surface (9) of a bead region (8) and consists of a first rubber rim strip part (7a), consisting of a first rubber compound, and a second rubber rim strip part (7b), consisting of a second rubber compound, wherein
- the first rubber rim strip part (7a) runs along the carcass turn-up (4a) and
- the second rubber rim strip part (7b) is designed such that, after pulling onto a rim (1), it is at least partially positioned between the bead cores (3) and the rim (1),
**characterized in that**
the first rubber compound has a rebound elasticity at 20°C according to DIN 53512 in the range of 20% and 80% and the rebound elasticity of the second rubber compound, likewise measured at 20°C according to DIN 53512, differs from the rebound elasticity of the first rubber compound.

2. Pneumatic vehicle tyre according to Claim 1, wherein the pneumatic vehicle tyre has a respective rubber rim strip (7) in each of the two bead regions (8) of the pneumatic vehicle tyre, wherein each of the two rubber rim strips (7) forms the respective outer surface (9) of the bead region (8) and consists of a first rubber rim strip part (7a), consisting of a first rubber compound, and a second rubber rim strip part (7b), consisting of a second rubber compound, wherein
- the first rubber compound of the one rubber rim strip (7) is the same rubber compound as the first rubber compound of the other rubber rim strip (7'),
- the second rubber compound of the one rubber rim strip (7) is the same rubber compound as the second rubber compound of the other rubber rim strip (7'),
- the first rubber rim strip part (7a) of each rubber rim strip (7, 7') runs along the respective carcass turn-up (4a) and
- the second rubber rim strip part (7b) of each rubber rim strip is designed such that, after pulling onto a rim (1), the second rubber rim strip part (7b) is at least partially positioned between the respective bead core (3) and the rim (1).

3. Pneumatic vehicle tyre according to either of the preceding claims, wherein the ratio of the rebound elasticity of the first rubber compound to the rebound elasticity of the second rubber compound is in the range of 1:2 to 2:1, preferably in the range of 1.01:1 to 2:1, particularly preferably in the range of 1.1:1 to 1.5:1.

4. Pneumatic vehicle tyre according to one of the preceding claims, wherein the first rubber compound comprises a natural rubber and/or a butadiene rubber or consists of natural rubber and butadiene rubber, and/or the first and/or second rubber compound comprises a natural rubber in amounts of 10 to 50 phr and/or a butadiene rubber in amounts of 50 to 90 phr, preferably a natural rubber in amounts of 15 to 35 phr and/or a butadiene rubber in amounts of 65 to 85 phr.

5. Pneumatic vehicle tyre according to one of the preceding claims, wherein the first and/or second rubber compound comprises a filler, preferably carbon black, wherein the filler is particularly preferably present in an amount of 20 to 180 phr, more particularly preferably in an amount of 40 to 110 phr, in particular more particularly preferably in an amount of 60 to 80 phr.

6. Pneumatic vehicle tyre according to one of the preceding claims, wherein the first and/or second rubber compound comprises zinc oxide and stearic acid, wherein preferably the total amount of zinc oxide and stearic acid is in the range of 1 to 30 phr, particularly preferably in an amount of 1 to 20 phr, more particularly preferably in an amount of 5 to 9 phr, or more particularly preferably the total amount of zinc oxide and stearic acid in the second rubber compound is in the range of 5 to 9 phr and the total amount of zinc oxide and stearic acid in the first rubber compound is in the range of 10 to 15 phr.

7. Pneumatic vehicle tyre according to one of the preceding claims, wherein the first and/or second rubber compound
- comprises sulfur, wherein the total amount of sulfur is preferably in the range of 1 to 10 phr, particularly preferably in an amount of 1 to 5 phr, wherein more particularly preferably the total amount of sulfur in the second rubber compound is in the range of 1 to 2.5 phr and the total amount of sulfur in the first rubber compound is in the range of 3 to 5 phr,
and/or
- comprises further vulcanizing agents other than sulfur, wherein the total amount of the further vulcanizing agents is preferably in the range of 1 to 10 phr, particularly preferably in an amount of 3 to 6 phr.

8. Pneumatic vehicle tyre according to one of the preceding claims, wherein
- the first rubber compound comprises a resin, wherein the resin is present preferably in an amount of 1 to 30 phr, particularly preferably in an amount of 5 to 15 phr, more particularly preferably in an amount of 1 to 9 phr,
and/or
- the first and/or the second rubber compound comprises a resin, wherein the resin is preferably present in an amount of 0 to 4 phr and particularly preferably there is no resin at all in the second rubber compound.

9. Pneumatic vehicle tyre according to one of the preceding claims, wherein
- the first rubber compound has a Shore hardness in the range of 60 Sh A to 130 Sh A, preferably a Shore hardness in the range of 60 Sh A to 80 Sh A, measured at 20°C by means of a durometer according to DIN ISO 7619-1, and/or
- the second rubber compound has a Shore hardness of greater than 30 Sh A, preferably a Shore hardness in the range of 40 Sh A to 89 Sh A, particularly preferably a Shore hardness in the range of 65 Sh A to 80 Sh A, in each case measured at 20°C by means of a durometer according to DIN ISO 7619-1.

10. Pneumatic vehicle tyre according to one of the preceding claims, wherein the ratio of the Shore hardness of the first rubber compound to the Shore hardness of the second rubber compound is in the range of 1:2 to 4:1, preferably in the range of 1:1.5 to 2:1, particularly preferably in the range of 1:1.1 to 1.5:1, more particularly preferably in the range of 1:1.1 to 1.1:1, in each case measured at 20°C by means of a durometer according to DIN ISO 7619-1.

11. Pneumatic vehicle tyre according to one of the preceding claims, wherein
- the first rubber compound has a rebound elasticity of greater than 50%, preferably in the range of above 50% to 90%, particularly preferably in the range of above 65% to 80%, measured at 20°C according to DIN 53512,
and/or
- the second rubber compound has a rebound elasticity of less than 80%, preferably in the range of 20% to 64%, preferably in the range of 55% to 64%, in each case measured at 20°C according to DIN 53512.

12. Pneumatic vehicle tyre according to one of the preceding claims, wherein
- the ratio of the width (10) of the first rubber rim strip part (7a) to the height (11) of the first rubber rim strip part (7a) is in the range of 1:1 to 1:10, preferably in the range of 1:3 to 1:7,
and/or
- the ratio of the height (11) of the first rubber rim strip part (7a) to the nominal height of the pneumatic vehicle tyre is in the range of 1:1 to 1:10, preferably in the range of 1:3 to 1:7.

13. Vehicle wheel system, comprising a rim (1) and a pneumatic vehicle tyre, pulled onto the rim (1), according to one of the preceding claims, wherein the second rubber rim strip part (7b) of the pneumatic vehicle tyre is at least partially positioned between the bead cores (3) and the rim (1).

14. Vehicle wheel system according to the preceding claim, wherein the first rubber rim strip part (7a) extends in the direction of the sidewall (5) beyond the rim flange (1a) of the rim (1) and in contact therewith (1a).

15. Production of a pneumatic vehicle tyre according to one of preceding Claims 1 to 12 or a vehicle wheel system according to either of preceding Claims 13 and 14.

## Revendications

1. Pneumatique de véhicule de type radial, comprenant
- deux zones de talon (8) avec des tringles (3),
- une nappe de carcasse (4) s'étendant autour des tringles (3), avec des reliefs de carcasse (4a) s'étendant en direction des flancs (5),
- au moins un caoutchouc de jante (7) qui forme la surface extérieure (9) d'une zone de talon (8) et qui est constitué d'une première partie de caoutchouc de jante (7a) constituée d'un premier mélange de caoutchouc et d'une deuxième partie de caoutchouc de jante (7b) constituée d'un deuxième mélange de caoutchouc,
- la première partie de caoutchouc de jante (7a) s'étendant le long du relief de carcasse (4a), et
- la deuxième partie de caoutchouc de jante (7b) étant réalisée de telle sorte qu'après avoir été montée sur une jante (1), elle est au moins partiellement agencée entre les tringles (3) et la jante (1),
**caractérisé en ce que**
le premier mélange de caoutchouc présente une élasticité de rebondissement à 20 °C selon la norme DIN 53512 dans la plage allant de 20 % et 80 % et l'élasticité de rebondissement du deuxième mélange de caoutchouc, également mesurée à 20 °C selon la norme DIN 53512, diffère de l'élasticité de rebondissement du premier mélange de caoutchouc.

2. Pneumatique de véhicule selon la revendication 1, dans lequel le pneumatique de véhicule présente respectivement un caoutchouc de jante (7) dans chacune des deux zones de talon (8) du pneumatique de véhicule, chacun des deux caoutchoucs de jante (7) formant respectivement la surface extérieure (9) de la zone de talon (8) et étant constitué d'une première partie de caoutchouc de jante (7a) constituée d'un premier mélange de caoutchouc et d'une deuxième partie de caoutchouc de jante (7b) constituée d'un deuxième mélange de caoutchouc,
- le premier mélange de caoutchouc de l'un des caoutchoucs de jante (7) étant le même mélange de caoutchouc que le premier mélange de caoutchouc de l'autre caoutchouc de jante (7'),
- le deuxième mélange de caoutchouc de l'un des caoutchoucs de jante (7) étant le même mélange de caoutchouc que le deuxième mélange de caoutchouc de l'autre caoutchouc de jante (7'),
- la première partie de caoutchouc de jante (7a) de chaque caoutchouc de jante (7, 7') s'étendant le long du relief de carcasse respectif (4a) et
- la deuxième partie de caoutchouc de jante (7b) de chaque caoutchouc de jante étant réalisée de telle sorte que la deuxième partie de caoutchouc de jante (7b), après avoir été montée sur une jante (1), est au moins partiellement agencée entre la tringle respective (3) et la jante (1).

3. Pneumatique de véhicule selon l'une quelconque des revendications précédentes, dans lequel le rapport entre l'élasticité de rebondissement du premier mélange de caoutchouc et l'élasticité de rebondissement du deuxième mélange de caoutchouc est dans la plage allant de 1:2 à 2:1, de préférence dans la plage allant de 1,01:1 à 2:1, de manière particulièrement préférée dans la plage allant de 1,1:1 à 1,5:1.

4. Pneumatique de véhicule selon l'une quelconque des revendications précédentes, dans lequel le premier mélange de caoutchouc présente un caoutchouc naturel et/ou un caoutchouc de butadiène ou est constitué de caoutchouc naturel et de caoutchouc de butadiène et/ou le premier et/ou le deuxième mélange de caoutchouc présente un caoutchouc naturel en des quantités de 10 à 50 pce et/ou un caoutchouc de butadiène en des quantités de 50 à 90 phr, de préférence un caoutchouc naturel en des quantités de 15 à 35 pce et/ou un caoutchouc de butadiène en des quantités de 65 à 85 pce.

5. Pneumatique de véhicule selon l'une quelconque des revendications précédentes, dans lequel le premier et/ou le deuxième mélange de caoutchouc présente une charge, de préférence du noir de carbone, la charge étant présente de manière particulièrement préférée en une quantité de 20 à 180 pce, de manière tout particulièrement préférée en une quantité de 40 à 110 pce, de manière tout particulièrement préférée en une quantité de 60 à 80 pce.

6. Pneumatique de véhicule selon l'une quelconque des revendications précédentes, dans lequel le premier et/ou le deuxième mélange de caoutchouc présente de l'oxyde de zinc et de l'acide stéarique, la quantité totale d'oxyde de zinc et d'acide stéarique étant de préférence dans la plage allant de 1 à 30 pce, de manière particulièrement préférée en une quantité de 1 à 20 pce, de manière tout particulièrement préférée en une quantité de 5 à 9 pce, ou de manière tout particulièrement préférée, la quantité totale d'oxyde de zinc et d'acide stéarique dans le deuxième mélange de caoutchouc étant dans la plage allant de 5 à 9 pce et la quantité totale d'oxyde de zinc et d'acide stéarique dans le premier mélange de caoutchouc étant dans la plage allant de 10 à 15 pce.

7. Pneumatique de véhicule selon l'une quelconque des revendications précédentes, dans lequel le premier et/ou le deuxième mélange de caoutchouc
- présente du soufre, la quantité totale de soufre étant de préférence dans la plage allant de 1 à 10 pce, de manière particulièrement préférée en une quantité de 1 à 5 pce, de manière tout particulièrement préférée la quantité totale de soufre dans le deuxième mélange de caoutchouc étant dans la plage allant de 1 à 2,5 pce et la quantité totale de soufre dans le premier mélange de caoutchouc étant dans la plage allant de 3 à 5 pce,
et/ou
- présentant d'autres agents de vulcanisation autres que le soufre, la quantité totale des autres agents de vulcanisation étant de préférence dans la plage allant de 1 à 10 pce, de manière particulièrement préférée en une quantité de 3 à 6 pce.

8. Pneumatique de véhicule selon l'une quelconque des revendications précédentes, dans lequel
- le premier mélange de caoutchouc présente une résine, la résine étant de préférence présente en une quantité de 1 à 30 pce, de manière particulièrement préférée en une quantité de 5 à 15 pce, de manière tout particulièrement préférée en une quantité de 1 à 9 pce,
et/ou
- le premier et/ou le deuxième mélange de caoutchouc présente une résine, la résine étant de préférence présente en une quantité de 0 à 4 pce et, de manière particulièrement préférée, aucune résine n'est présente dans le deuxième mélange de caoutchouc.

9. Pneumatique de véhicule selon l'une quelconque des revendications précédentes, dans lequel
- le premier mélange de caoutchouc présente une dureté Shore dans la plage allant de 60 Sh-A à 130 Sh-A, de préférence une dureté Shore dans la plage allant de 60 Sh-A à 80 Sh-A, mesurée à 20 °C au moyen d'un duromètre selon la norme DIN ISO 7619-1,
et/ou
- le deuxième mélange de caoutchouc présente une dureté Shore supérieure à 30 Sh-A, de préférence une dureté Shore dans la plage allant de 40 Sh-A à 89 Sh-A, de manière particulièrement préférée une dureté Shore dans la plage allant de 65 Sh-A à 80 Sh-A, dans chaque cas mesurée à 20 °C au moyen d'un duromètre selon DIN ISO 7619-1.

10. Pneumatique de véhicule selon l'une quelconque des revendications précédentes, dans lequel le rapport entre la dureté Shore du premier mélange de caoutchouc et la dureté Shore du deuxième mélange de caoutchouc se situe dans la plage allant de 1:2 à 4:1, de préférence dans la plage allant de 1:1,5 à 2:1, de manière particulièrement préférée dans la plage allant de 1:1,1 à 1,5:1, de manière tout particulièrement préférée dans la plage allant de 1:1,1 à 1,1:1, dans chaque cas mesurée à 20 °C au moyen d'un duromètre selon la norme DIN ISO 7619-1.

11. Pneumatique de véhicule selon l'une quelconque des revendications précédentes, dans lequel
- le premier mélange de caoutchouc présente une élasticité de rebondissement supérieure à 50 %, de préférence dans la plage allant de plus de 50 % à 90 %, de manière particulièrement préférée dans la plage allant de plus de 65 % à 80 %, mesurée à 20 °C selon la norme DIN 53512,
et/ou
- le deuxième mélange de caoutchouc présente une élasticité de rebondissement inférieure à 80 %, de préférence dans la plage allant de 20 % à 64 %, de préférence dans la plage allant de 55 % à 64 %, dans chaque cas mesurée à 20 °C selon la norme DIN 53512.

12. Pneumatique de véhicule selon l'une quelconque des revendications précédentes, dans lequel
- le rapport entre la largeur (10) de la première partie de caoutchouc de jante (7a) et la hauteur (11) de la première partie de caoutchouc de jante (7a) se situe dans la plage allant de 1:1 à 1:10, de préférence dans la plage allant de 1:3 à 1:7, et/ou
- le rapport entre la hauteur (11) de la première partie de caoutchouc de jante (7a) et la hauteur nominale du pneumatique de véhicule se situe dans la plage allant de 1:1 à 1:10, de préférence dans la plage allant de 1:3 à 1:7.

13. Système de roue de véhicule, comprenant une jante (1) et un pneumatique de véhicule selon l'une quelconque des revendications précédentes monté sur la jante (1), dans lequel la deuxième partie de caoutchouc de jante (7b) du pneumatique de véhicule est agencée au moins partiellement entre les tringles (3) et la jante (1).

14. Système de roue de véhicule selon la revendication précédente, dans lequel la première partie de caoutchouc de jante (7a) s'étend en direction du flanc (5) au-delà du rebord de jante (1a) de la jante (1) et en contact avec celui-ci (1a).

15. Fabrication d'un pneumatique de véhicule selon l'une quelconque des revendications 1 à 12 précédentes ou d'un système de roue de véhicule selon l'une quelconque des revendications 13 à 14 précédentes.
